# EUROPÄISCHE PATENTSCHRIFT

(11) **EP 2 183 511 B1**
(45) Veröffentlichungstag und Bekanntmachung des Hinweises auf die Patenterteilung: **01.05.2013**
(21) Anmeldenummer: 08785921.1
(22) Anmeldetag: 04.07.2008
(51) Int. Cl.: F16K 31/06, H01F 7/128

(54) **ELEKTROMAGNETISCHE STELLEINHEIT**
ELECTROMAGNETIC ACTUATING UNIT
UNITÉ ÉLECTROMAGNÉTIQUE DE RÉGLAGE

(30) Priorität: 04.08.2007 DE 102007036925
(43) Veröffentlichungstag der Anmeldung: 12.05.2010
(73) Patentinhaber: Schaeffler Technologies AG & Co. KG, 91074 Herzogenaurach (DE)
(72) Erfinder: STÖCKEL, Herbert, 91322 Gräfenberg (DE); STEGMANN, Peter, 90441 Nürnberg (DE); HOPPE, Jens, 91056 Erlangen (DE); KUFNER, Andreas, 91052 Erlangen (DE)
(86) Internationale Anmeldenummer: PCT/EP2008/058667
(87) Internationale Veröffentlichungsnummer: WO 2009/019089

(56) Entgegenhaltungen:
- EP-A- 1 764 537
- DE-A1-102004 025 969
- DE-A1-102005 034 938
- DE-U1- 9 005 675
- DE-U1- 9 313 020

## Beschreibung

### Gebiet der Erfindung

Die Erfindung betrifft ein Verfahren zur Herstellung einer elektromagnetischen Stelleinheit für ein Hydraulikventil, mit einem Gehäuse und einem Verschlusselement, wobei das Gehäuse die elektromagnetische Stelleinheit zumindest teilweise gegenüber der Umgebung begrenzt, wobei das Verschlusselement innerhalb einer Einführöffnung des Gehäuses angeordnet ist und wobei an einer Grenzfläche zwischen dem Gehäuse und dem Verschlusselement eine Dichtmittelaufnahme ausgebildet ist.

Derartige Hydraulikventile, beispielsweise Proportionalwegeventile oder Schaltventile, werden beispielsweise in Brennkraftmaschinen und dort beispielsweise zur Ansteuerung von hydraulischen Nockenwellenverstellern oder schaltbaren Nockenfolgern eingesetzt. Die Hydraulikventile bestehen aus einer elektromagnetischen Stelleinheit und einem Ventilabschnitt. Der Ventilabschnitt stellt den hydraulischen Abschnitt des Wegeventils dar, wobei an diesem zumindest ein Zulaufanschluss, mindestens ein Arbeitsanschluss und ein Tankanschluss ausgebildet sind. Mittels der elektromagnetischen Stelleinheit können gezielt bestimmte Anschlüsse des Ventilabschnitts hydraulisch miteinander verbunden und somit die Druckmittelströme gelenkt werden.

Ein derartiges Hydraulikventil ist beispielsweise in der DE 10 2004 025 969 A1 offenbart. Das Hydraulikventil weist einen Ventilabschnitt und eine elektromagnetische Stelleinheit auf.

Die elektromagnetische Stelleinheit dieses Hydraulikventils umfasst innerhalb eines Gehäuses einen oberen und einen unteren Magnetpol (Magnetjoch), eine auf einem Spulenkörper angeordnete Spule und einen Anker.
Die Spule und die Magnetpole sind innerhalb des Gehäuses der elektromagnetischen Stelleinheit koaxial zueinander angeordnet. Die Magnetpole sind dabei in axialer Richtung zueinander versetzt angeordnet. Radial innerhalb der Magnetpole ist der Anker axial beweglich angeordnet. Der Anker, das Gehäuse und die Magnetpole bilden einen Flusspfad für die magnetischen Flusslinien, welche durch Bestromen der Spule hervorgerufen werden.

Durch Bestromen der Spule wird der Anker in Richtung des unteren Magnetpols gedrängt, wobei diese Bewegung mittels einer am Anker angebrachten Stößelstange auf einen Steuerkolben des Ventilabschnitts übertragen wird. Das Gehäuse weist an der dem Ventilabschnitt abgewandten Seite eine Einführöffnung auf, in die der Spulenkörper eingesteckt ist. Der im Bereich der Einführöffnung angeordnete Bereich des Spulenkörpers dient als Verschlusselement, der die Einführöffnung verschließt. Die zylindrische Außenmantelfläche des Verschlusselements ist mit einer ringförmig umlaufenden Nut versehen, in der ein Dichtring angeordnet ist. Der Dichtring hat die Aufgabe das Eindringen aggressiver Substanzen, beispielsweise Spritzwasser, zu verhindern.

Während der Montage der Stelleinheit wird zunächst der Dichtring in die Ringnut des Verschlusselements eingelegt und anschließend der Spulenkörper in die Einführöffnung eingeführt. Der Dichtring ist im Querschnitt im Vergleich zur Nutausdehnung mit Übermaß ausgeführt.

Bei dieser Ausführungsform besteht die Gefahr, dass der Dichtring während des Einführens des Spulenkörpers in die Einführöffnung abschert, wodurch die Dichtfunktion des Dichtelements nicht mehr gewährleistet ist. Des Weiteren müssen die Dichtflächen an dem Gehäuse und dem Verschlusskörper kostenintensiv mit hoher Genauigkeit gefertigt werden. Somit besteht die Gefahr, dass aggressive Medien, beispielsweise Öl oder Wasser, aus der Umgebung zwischen dem Gehäuse und dem Verschlusselement in das Innere der elektromagnetischen Stelleinheit eindringen und diese schädigen, beispielsweise zu Kurzschlüssen führen können.

Die EP 1 764 537 A1 offenbart eine elektromagnetische Stelleinheit, wobei zwischen einem Verschlussteil und einem Gehäuse ein Dichtring angeordnet ist. Dieser Dichtring befindet sich auf einem abgesetzten Durchmesser des Gehäuses und wird in axialer Richtung von dem Verschlussteil überdeckt. Der Verbund von Gehäuse, Verschlussteil und Dichtring ist durch eine Vercrimpung realisiert.

### Zusammenfassung der Erfindung

Der Erfindung liegt daher die Aufgabe zugrunde diese geschilderten Nachteile zu vermeiden und somit eine elektromagnetische Stelleinheit für ein Hydraulikventil zu schaffen, die auch in aggressiven Umgebungen dauerhaft funktionssicher einsetzbar ist. Dabei soll eine hohe Prozesssicherheit während der Herstellung der Stelleinheit garantiert sein.

Diese Aufgabe wird durch ein Verfahren nach dem Oberbegriff des Anspruchs dadurch gelöst, dass zumindest ein erster Kanal vorgesehen ist, der sowohl in die Dichtmittelaufnahme mündet als auch zur Umgebung der Stelleinheit offen ausgeführt ist, und nach der Montage des Verschlusselements in der Einführöffnung des Gehäuses eine Dichtmasse über den ersten Kanal in die Dichtmittelaufnahme eingebracht wird.

Weiterhin kann vorgesehen sein, nach dem Einbringen der Dichtmasse diese auszuhärten.

Vorteilhafterweise wird während des Einbringens der Dichtmasse der Einbringdruck überwacht und bei einem sprunghaften Anstieg des Einbringdrucks der Einbringvorgang beendet.
Alternativ kann das einzubringende Volumen der Dichtmasse überwacht werden, wobei das einzubringende Volumen dem Volumen der Dichtmittelaufnahme zuzüglich des Volumens der Kanäle entspricht.

In einer weiteren Alternative kann vorgesehen sein, dass zumindest ein zweiter Kanal, in den von außerhalb der Stelleinheit keine Dichtmasse eingebracht wird, auf das Austreten von Dichtmasse überwacht wird, wodurch das Ende des Befüllvorgangs detektiert wird.

Elektromagnetische Stelleinheiten von Hydraulikventilen dienen zur Steuerung der Volumenströme innerhalb der zugehörigen Ventilabschnitte. Die elektromagnetischen Stelleinheiten weisen ein Gehäuse auf, in dem ein Anker linear verschiebbar geführt ist. Die Verschiebung des Ankers wird durch Variation eines Magnetfeldes hervorgerufen, welches beispielsweise durch eine Spule, die innerhalb des Gehäuses angeordnet ist, generiert wird und innerhalb eines Magnetkreises geführt wird. Der Magnetkreis besteht üblicherweise aus dem Gehäuse und einem oder mehreren Magnetjochen, welche ebenfalls Innerhalb des Gehäuses angeordnet sind. Die Bewegung des Ankers wird auf einen Steuerkolben des Ventilabschnitts übertragen und somit die Druckmittelströme innerhalb des Ventilabschnitts geregelt.

Das Gehäuse weist zumindest eine Einführöffnung auf, über die während der Montage einzelne Bauteile der Stelleinheit zumindest teilweise innerhalb des Gehäuses angeordnet werden können. Die Einführöffnung ist im montierten Zustand mittels eines Verschlusselements verschlossen. Als Verschlusselement kommen beispielsweise ein Magnetjoch, ein Ventilgehäuse des Ventilabschnitts oder ein Verschlussbereich eines Spulenträgers in Betracht. Dabei ist das Verschlusselement derart ausgebildet, dass dieses die Einführöffnung, abgesehen von einem Spalt an den Grenzflächen, verschließt. Um zu verhindern, dass aggressive Medien in das Innere des Gehäuses eindringen, ist vorgesehen an der Grenzfläche zwischen dem Gehäuse und dem Verschlusselement ein Dichtelement anzuordnen. Zu diesem Zweck ist entweder an der Grenzfläche des Gehäuses oder des Verschlusselements oder an beiden Grenzflächen eine Dichtmittelaufnahme zur Aufnahme eines Dichtmittels vorgesehen.

Um zu verhindern, dass das Dichtelement während der Montage der elektromagnetischen Stelleinheit beschädigt wird oder abschert, wird vorgeschlagen dieses erst nach der Montage einzubringen. Zu diesem Zweck ist ein Kanal vorgesehen, der ausgehend vom Äußeren der Stelleinheit zur Dichtmittelaufnahme verläuft und in diese mündet, so dass die Dichtmittelaufnahme über diesen Kanal mit dem Äußeren der Stelleinheit kommuniziert. Ebenso denkbar ist die Ausbildung mehrerer derartiger Kanäle. Ein derartiger Kanal kann beispielsweise durch eine Öffnung im Gehäuse, eine Aussparung, beispielsweise eine Längsnut, in dem Spulenträger, dem Gehäuse oder dem Magnetjoch oder ähnlichem ausgeführt sein. Ebenso denkbar ist, dass das Verschlusselement oder das Gehäuse im Bereich der zu dichtenden Stelle stufenförmig ausgeführt ist, wodurch ein Spalt entsteht, der von der zu dichtenden Stelle zu dem äußeren der Stelleinheit führt. In diesem Fall befindet sich die Dichtmittelaufnahme im Bereich der Stufe des Gehäuses oder des Verschlusselements und der Kanal entspricht dem nach außen offenen Spalt zwischen diesen Bauteilen.

Bei der Einführöffnung kann es sich beispielsweise um eine kreisförmige Öffnung eines im Wesentlichen zylindrisch ausgeführten Gehäuses handeln. In dieser Öffnung wird während der Montage ein ebenfalls zylindrischer Bereich eines Verschlusselements, beispielsweise eines Magnetjochs oder eines Spulenträgers, positioniert. Die Dichtmittelaufnahme kann beispielsweise als Ringnut in der Außenmantelfläche des Verschlusselements oder der Innenmantelfläche des Gehäuses ausgebildet sein, wobei die offene Seite der Ringnut von dem anderen Bauteil, abgesehen von einem geringen Spalt, verschlossen wird.

Während der Herstellung der elektromagnetischen Stelleinheit ist vorgesehen, dass nach der Montage des Verschlusselements in der Einführöffnung des Gehäuses eine Dichtmasse über den Kanal in die Dichtmittelaufnahme eingebracht wird. Bei der Dichtmasse kann es ist sich beispielsweise um eine Flüssigdichtung, ein pasten- oder gelähnliches Material handeln. Die Dichtmasse kann beispielsweise in den Kanal eingespritzt oder eingepresst werden. Während des Einbringens der Dichtmasse in die Dichtmittelaufnahme kann die dort vorhandene Luft über den Spalt zwischen dem Gehäuse und dem Verschlusselement in die Umgebung entweichen, wodurch eine vollständige Befüllung der Dichtmittelaufnahme gewährleistet ist. Alternativ oder kumulativ kann ein zweiter Kanal vorgesehen sein, der ausgehend vom Äußeren der Stelleinheit zur Dichtmittelaufnahme verläuft und in diese mündet, so dass die Dichtmittelaufnahme über diesen Kanal ebenfalls mit dem äußeren der Stelleinheit kommuniziert. Über diesen Kanal kann die innerhalb der Dichtmittelaufnahme vorhandene Luft entweichen. Zusätzlich kann überschüssiges Dichtmaterial austreten, was gleichzeitig während des Einbringens des Dichtmittels detektiert und als Kriterium zur Beendigung des Einbringvorgangs genutzt werden kann. Alternativ kann das einzubringende Volumen der Dichtmasse überwacht werden. Dabei ist vorgesehen, dass nur eine bestimmte Masse oder ein bestimmtes Volumen eingebracht wird. Die einzubringende Masse bzw. das einzubringende Volumen bestimmt sich durch das Volumen der Dichtmittelaufnahme und der Kanäle.
In dem Fall, das nur erste Kanäle vorgesehen sind, über die die Dichtmasse eingebracht wird, kann während des Einbringens der Dichtmasse der Einbringdruck überwacht werden. Nach vollständiger Befüllung der Dichtmittelaufnahme ist in diesem Fall ein sprunghafter Druckanstieg zu verzeichnen, der als Kriterium zur Beendigung des Einstellvorgangs genutzt werden kann.

Nach der Beendigung des Einstellvorgangs kann vorgesehen sein, dass die Dichtmasse ausgehärtet wird. Dies kann beispielsweise durch Einstellung geeigneter Temperaturen, Zufuhr von Sauerstoff, UV-Strahlung oder Wasser (bspw. Luftfeuchtigkeit, Dampf bei feuchtigkeitsvernetzenden Materialien, wie bspw. Silikone, Methylcyanacrylat) erfolgen. Ebenfalls denkbar ist die Verwendung einer 2 Komponenten Dichtmasse, welche selbstständig nach dem Befüllen der Dichtmittelaufnahme aushärtet. Ebenfalls denkbar ist der Einsatz anaerob härtender Materialien, bei denen der Härter bei Kontakt mit Sauerstoff inaktiv ist. Hierbei muss die Dichtmasse vor Sauerstoff abgeschirmt werden.

Die Stelleinheit weist nach Beendigung der Montage und des Dichtmitteleintrags ein Dichtelement auf, welches in der Dichtmittelaufnahme angeordnet ist und sich zumindest in einen der Kanäle hinein erstreckt. Dabei kann das Dichtelement beispielsweise aus der Gruppe der Silikone, der Polyurethane, der Polysulfide, der Kautschuke oder der silanmodifizierten Polymere (MS Polymere) bestehen.

Der zweite Kanal kann zum ersten Kanal derart positioniert sein, dass die kürzeste Bahnkurve entlang der Dichtmittelaufnahme zwischen deren Mündungspositionen maximal ist. Bei nicht in sich geschlossenen Druckmittelaufnahmen münden der erste und der zweite Kanal vorteilhafterweise an den beiden Enden der Dichtmittelaufnahme. Bei ring- bzw. kreisförmigen oder anderen in sich geschlossenen Druckmittelaufnahmen ist der Mündungsbereich des zweiten Kanals vorteilhafterweise derart angeordnet, dass die Bahnkurven ausgehend von der Mündungsposition des ersten Kanal entlang der beiden möglichen Wegrichtungen gleichlang sind.

Durch das nachträgliche Einfügen des Dichtmittels in die Dichtmittelaufnahme, nach der Positionierung des Verschlusskörpers innerhalb des Gehäuses, wird die Gefahr des Abscherens des Dichtmittels während der Montage vermieden. Gleichzeitig stellt die nachträgliche Einbringung des Dichtmittels in die Dichtmittelaufnahme über Einfüllkanäle ein prozesssicheres Verfahren zur Herstellung der Stelleinheit dar. Somit werden die Prozesssicherheit des Verfahrens und die Dichtfunktion des Dichtmittels erhöht. Gleichzeitig wird ein einfacher Weg aufgezeigt ein magnetisch leitfähiges Dichtelement zu realisieren.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung vereinfacht dargestellt ist. Es zeigen
- Figur 1a: einen Längsschnitt durch eine erste Ausführungsform eines Hydraulikventils mit einer erfindungsgemäßen elektromagnetischen Stelleinheit entlang der Linie IA-IA in Figur 2b,
- Figur 1b: einen Längsschnitt durch das Hydraulikventil aus Figur 1a entlang der Linie IB-IB in Figur 2b,
- Figur 2a: einen Querschnitt durch die erste Ausführungsform eines Hydraulikventils während dessen Herstellung entlang der Linie II-II in Figur 1a,
- Figur 2b: einen Querschnitt analog Figur 2a nach Fertigstellung des Hydraulikventils,
- Figur 3: einen Längsschnitt durch eine zweite Ausführungsform eines Hydraulikventils mit einer erfindungsgemäßen elektromagnetischen Stelleinheit in der gleichen Schnittebene wie in Figur 1 a.

### Ausführliche Beschreibung der Zeichnung

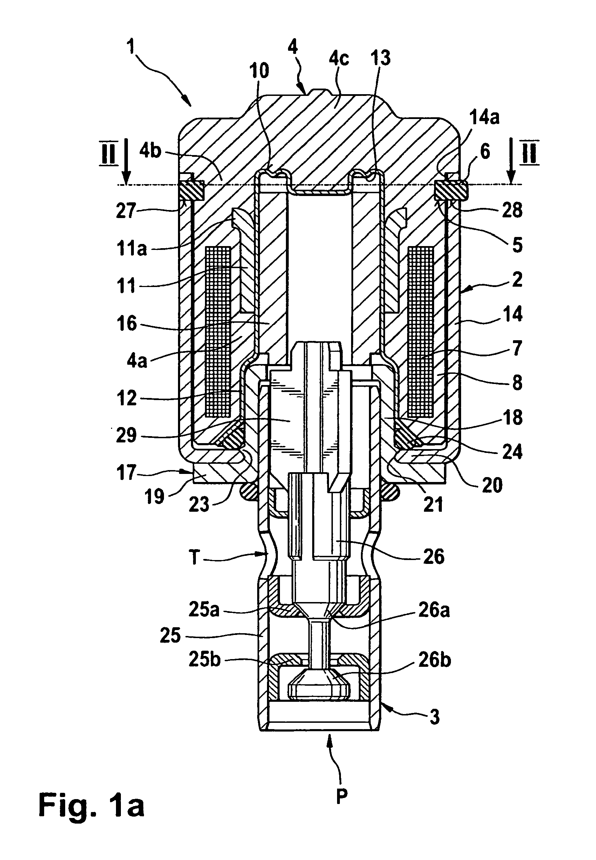

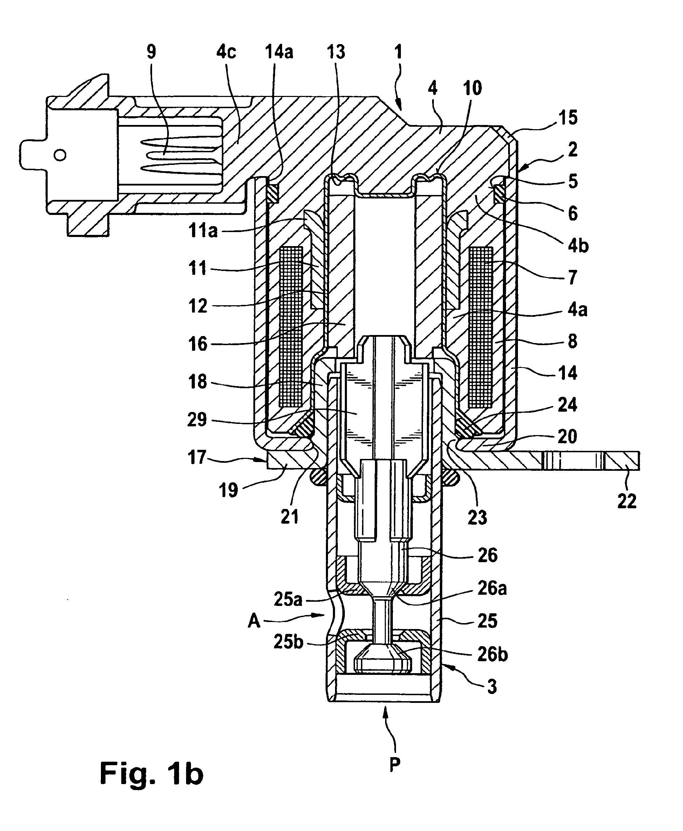

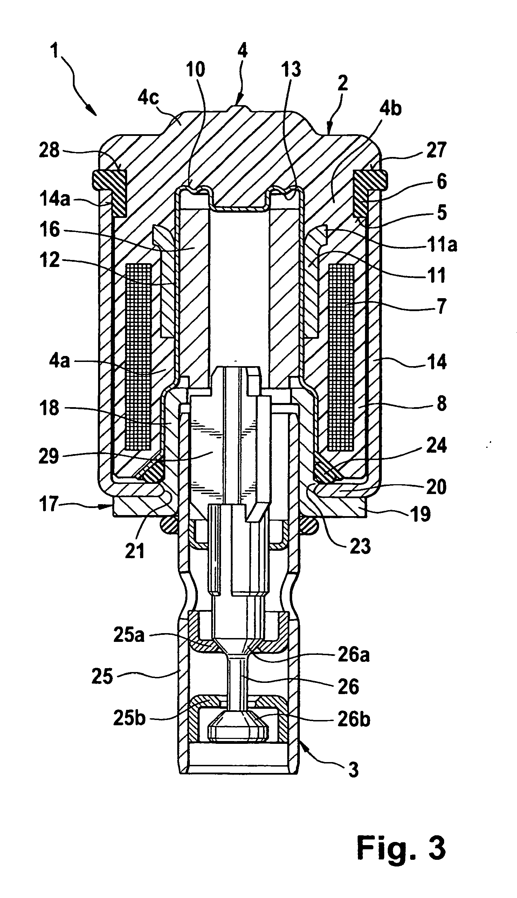

Die Figuren 1 und 3 zeigen Ausführungsformen erfindungsgemäßer elektromagnetischer Stelleinheiten 2 am Beispiel von als 3/2-Wegeschaltventil ausgeführten Hydraulikventilen 1. Ebenso denkbar sind Anwendungen der erfindungsgemäßen Stelleinheit 2 in anderen Schaltventilen oder anderen Hydraulikventilen 1, wie beispielsweise 4/3- oder 3/2-Wegeproportionalventilen.

Das Hydraulikventil 1 weist eine elektromagnetische Stelleinheit 2 und einen Ventilabschnitt 3 auf.
Im Anwendungsfall von Nockenwellenverstellern kann die Erfindung Einsatz sowohl in Einsteckventilen, die getrennt vom Nockenwellenversteller, beispielsweise am Zylinderkopf oder Zylinderkopfdeckel, montiert sind, als auch in Zentralventilanwendungen finden. Bei Zentralventilanwendungen ist der Ventilabschnitt 3 getrennt von der elektromagnetischen Stelleinheit 2 ausgeführt und koaxial zur Nockenwelle bzw. einem Innenrotor des Nockenwellenverstellers angeordnet. Die Stelleinheit 2 ist in diesem Fall axial zu dem Ventilabschnitt 3 angeordnet und beispielsweise an einem Zylinderkopfdeckel befestigt. Die elektromagnetische Stelleinheit 2 weist einen Spulenkörper 4 auf. Der Spulenkörper 4 setzt sich aus einem Abschnitt, der als Spulenträger 4a dient, einem Abschnitt, der als Verschlusselement 4b dient, und einem Abschnitt, der als Anschlusselement 4c dient, zusammen.

Der Spulenträger 4a trägt eine aus mehreren Windungen eines geeigneten Drahtes bestehende Spule 7. Die radial äußere Mantelfläche der Spule 7 wird von einer hülsenförmigen Materialschicht 8 umgeben, welche aus einem nicht magnetisierbaren Material besteht. Die Materialschicht 8 kann beispielsweise aus einem geeigneten Kunststoff bestehen und auf die gewickelte Spule 7 aufgespritzt werden.

Innerhalb des Anschlusselements 4c ist eine elektrische Steckverbindung 9 aufgenommen, über welche die Spule 7 mit Strom beaufschlagt werden kann.

Der Spulenkörper 4 ist zumindest teilweise innerhalb eines topfförmig ausgebildeten Gehäuses 14 angeordnet. In der dargestellten Ausführungsform befindet sich der Spulenträger 4a und ein Teilbereich des Verschlusselements 4b innerhalb des Gehäuses 14.

Das Gehäuse 14 weist einen Boden 20 auf, dem in axialer Richtung eine Einführöffnung 14a gegenüberliegt. Über die Einführöffnung 14a kann während der Montage der Spulenkörper 4 in das Gehäuse 14 eingeführt werden. Dem Verschlusselement 4b kommt in dieser Ausführungsform die Aufgabe zu, das Innere der Stelleinheit 2 vor dem Eindringen von aggressiven Medien über die Einführöffnung 14a zu verhindern. Zu diesem Zweck ist der Außendurchmesser des Verschlusselements 4b im Wesentlichen dem Innendurchmesser des Gehäuses 14 angepasst. Alternativ dazu kann der Außendurchmesser des Verschlusselements 4b geringfügig kleiner als der Innendurchmesser des Gehäuses 14 ausgeführt sein, so dass zwischen diesen Bauteilen ein kleiner Spalt vorhanden ist.

An der Einführöffnung 14a des Gehäuses 14 sind Laschen 15 ausgebildet, die einen Absatz des Verschlusselements 4b in axialer Richtung überragen und in radialer Richtung zumindest teilweise umgreifen. Somit ist der Spulenkörper 4 fest innerhalb des Gehäuses 14 fixiert.

Das Gehäuse 14 kann beispielsweise mittels eines kostengünstigen, spanlosen Umformprozesses, beispielsweise eines Tiefziehverfahrens, aus einem geeigneten Rohling, beispielsweise einem geeigneten Blechteil gefertigt werden.

Der Spulenkörper 4 ist mit einer im Wesentlichen zylinderförmigen, sacklochartigen Ausnehmung 10 ausgeführt, welche konzentrisch zur Spule 7 ausgebildet ist. Des Weiteren nimmt der Spulenkörper 4 am bodenseitigen Ende der Ausnehmung 10 ein hülsenförmig ausgeführtes erstes Magnetjoch 11 auf. Innerhalb der Ausnehmung 10 ist eine topfförmige Ankerführungshülse 12 angeordnet, die einen Ankerraum definiert. Die Ankerführungshülse 12 erstreckt sich in axialer Richtung entlang der gesamten Ausnehmung 10 und umgreift den Spulenkörper 4 an dessen Öffnung in radialer Richtung zumindest teilweise.

Innerhalb der Ankerführungshülse 12 ist ein Anker 16 in axialer Richtung verschiebbar angeordnet. Der Außendurchmesser des Ankers 16 ist dem Innendurchmesser der Ankerführungshülse 12 angepasst, wodurch eine Lagerung des Ankers 16 in der Ankerführungshülse 12 realisiert ist. Der Verschiebeweg des Ankers 16 wird in der einen Richtung durch Anschläge 13 und in der anderen Richtung durch ein zweites Magnetjoch 17 begrenzt.

Das zweite Magnetjoch 17 weist einen rohrförmigen Abschnitt 18 und einen sich in axialer Richtung daran anschließenden ringförmigen Abschnitt 19 auf. Der rohrförmige Abschnitt 18 erstreckt sich durch eine in dem Boden 20 des Gehäuses 14 ausgebildeten Öffnung 21 in die Ankerführungshülse 12. Dabei ist der Außendurchmesser des rohrförmigen Abschnitts 18 dem Durchmesser der Öffnung 21 angepasst.

Der ringförmige Abschnitt 19 weist einen Montageflansch 22 auf, der zur Befestigung des Hydraulikventils 1 an einer nicht dargestellten Umgebungskonstruktion, beispielsweise einem Zylinderkopfdeckel dient.

Der rohrförmige Abschnitt 18 des zweiten Magnetjochs 17 ist mit dem Gehäuse 14 mittels einer Verstemmung 23 ortsfest verbunden. Zwischen dem rohrförmigen Abschnitt 18 des zweiten Magnetjochs 17 und der Ankerführungshülse 12 ist ein Dichtring 24 angeordnet. Dieser verhindert, dass in der Ankerführungshülse 12 vorhandenes Schmiermittel zum Spulenkörper 4 gelangt, wodurch dieser vor Schädigungen durch das Schmiermittel geschützt wird.

Das erste Magnetjoch 11 ist an dem offenen Ende, welches dem zweiten Magnetjoch 17 abgewandt ist, mit einem sich in radialer Richtung erstreckenden Kragen 11a versehen.
An einer Außenmantelfläche des Verschlusselements 4b ist oberhalb des Kragens 11a eine Dichtmittelaufnahme 5 in Form einer Ringnut ausgebildet. Das Gehäuse 14 ist mit einem ersten und einem zweiten Kanal 27,28 versehen, die einerseits in die Dichtmittelaufnahme 5 münden und andererseits nach außen offen ausgebildet sind. Somit kommuniziert die Dichtmittelaufnahme 5 vor dem Einbringen eines Dichtmittels über jeden der Kanäle 27, 28 mit dem Raum außerhalb des Gehäuses 14 und damit der Stelleinheit 2. In der dargestellten Ausführungsform sind die Kanäle 27 als Öffnung bzw. Aussparungen in dem Gehäuse 14 ausgebildet und liegen sich diametral gegenüber. In einer alternativen Ausführungsform kann vorgesehen sein, dass nur ein erster Kanal 27 aber keine zweiten Kanäle 28 vorhanden sind.
In der Dichtmittelaufnahme 5 ist ein Dichtelement 6 angeordnet, welches sich gleichzeitig in die Kanäle 27, 28 erstreckt. Das Dichtelement 6 füllt die gesamte Ringnut aus, wobei das Dichtmaterial zum einen an den Begrenzungsflächen der Ringnut und zum anderen an der Innenmantelfläche des zylindrischen Gehäuses 14 anliegt. Dadurch wird eine Dichtstelle zwischen dem Gehäuse 14 und dem Verschlusselement 4b realisiert, wodurch das Eindringen von aggressiven Medien in das Innere der Stelleinheit 2 an dieser Stelle wirkungsvoll unterbunden wird.

Durch Bestromen der Spule 7 wird innerhalb der Stelleinheit 2 ein Magnetfeld erzeugt, wobei die magnetischen Feldlinien entlang eines definierten Flusspfades verlaufen. Dieser Flusspfad verläuft innerhalb des ersten Magnetjochs 11 in axialer Richtung, wobei dieser an dessen axialem Ende dem Kragen 11a folgt. Von dem Kragen 11a treten die Magnetfeldlinien in das Gehäuse 14 über und werden in diesem in axialer Richtung, entgegen der Flussrichtung innerhalb des ersten Magnetjochs 11, zum zweiten Magnetjoch 17 geleitet. Innerhalb des zweiten Magnetjochs 17 gelangen die Flusslinien in Richtung des Ankers 16, wobei diese über einen zwischen dem Anker 16 und dem zweiten Magnetjoch 17 ausgebildeten Luftspalt in den Anker 16 übertreten. Der weitere Flusspfad verläuft innerhalb des Ankers 16 und wird durch den Übertritt durch die Ankerführungshülse 12 in das erste Magnetjoch 11 komplettiert.

Der Ventilabschnitt 3 des als Schaltventil ausgeführten Hydraulikventils 1 besteht aus einem hohlzylindrischen Ventilgehäuse 25, welches zwei Ventilsitze 25a,b aufweist. Innerhalb des Ventilgehäuses 25 ist ein Steuerkolben 26 mit zwei Schließkörpern 26a,b angeordnet. Das Ventilgehäuse 25 ist innerhalb des rohrförmigen Abschnitts 18 des zweiten Magnetjochs 17 aufgenommen und weist einen stirnseitigen Druckanschluss P, einen Tankanschluss T und einen Arbeitsanschluss A auf. Der Tankanschluss T und der Arbeitsanschluss A sind als radiale Öffnungen in der zylindrischen Mantelfläche des Ventilgehäuses 25 ausgebildet. Zwischen dem Tankanschluss T und dem Arbeitsanschluss A ist ein erster Ventilsitz 25a und zwischen dem Druckanschluss P und dem Arbeitsanschluss A ist ein zweiter Ventilsitz 25b angeordnet.

Der Steuerkolben 26 weist auf der dem Arbeitsanschluss A abgewandten Seite des ersten Ventilsitzes 25a einen konischen Schließkörper 26a auf. Des Weiteren ist an der dem ersten Ventilsitz 25a abgewandten Seite des zweiten Ventilsitzes 25b ein zweiter Schließkörper 26b angeordnet. Das ankerseitige Ende des Steuerkolbens 26 ist mittels einer Stößelstange 29 fest mit dem Anker 16 verbunden, so dass sich der Steuerkolben 26 mit dem Anker 16 in axialer Richtung bewegt. Durch die Stellung des Steuerkolbens 26, und somit durch geeignete Bestromung der Spule 7 kann der Arbeitsanschluss A wahlweise mit dem Tankanschluss T oder dem Druckanschluss P verbunden werden.

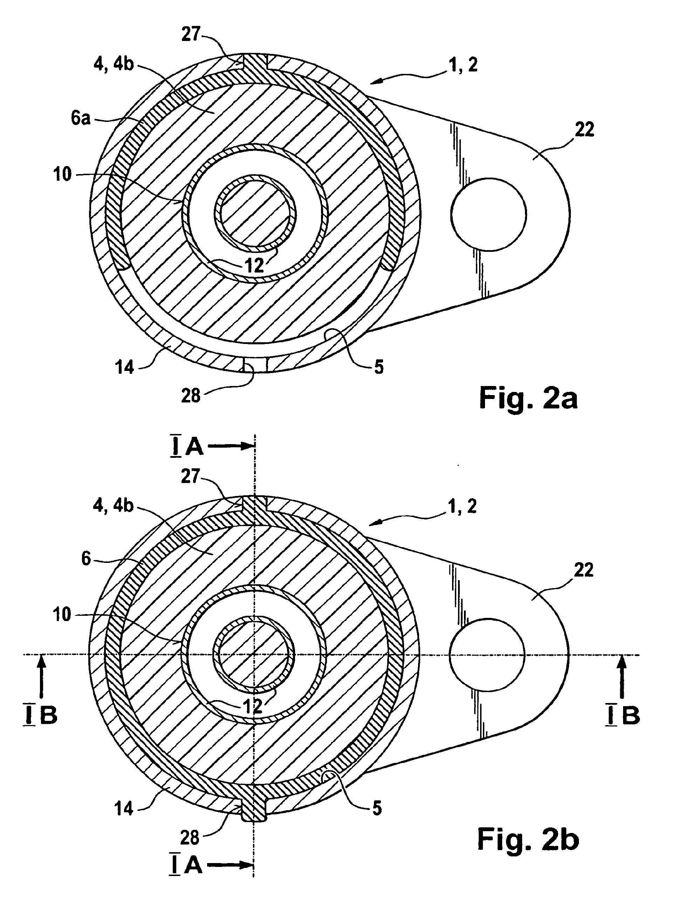

Während der Montage des Hydraulikventils 1 wird zunächst das zweite Magnetjoch 17 in der Öffnung 21 des Bodens 20 des Gehäuses 14 positioniert. Anschließend werden diese beiden Bauteile mittels eines Verstemmvorgangs miteinander verbunden. In einem weiteren Schritt wird der Dichtring 24 durch die Einführöffnung 14a zum Boden 20 geführt, der Anker 16 in dem Spulenkörper 4 positioniert und der Spulenkörper 4 mit dem Anker 16 in die Einführöffnung 14a des Gehäuses 14 eingeführt. Anschließend werden die äußeren Bereiche der Laschen 15 in radialer Richtung umgebogen und somit der Spulenkörper 4 innerhalb des Gehäuses 14 fixiert.
Anschließend wird das Dichtelement 6 in der Dichtmittelaufnahme 5 positioniert. Zu diesem Zweck wird über den ersten Kanal 27 eine Dichtmasse 6a, beispielsweise in Form einer Flüssigdichtung, einer gel- oder pastenartigen Masse, in die Dichtmittelaufnahme 5 eingebracht. Die Figur 2a zeigt die Stelleinheit 2 während eines Verfahrensschrittes, in dem die Dichtmittelaufnahme 5 noch nicht vollständig mit der Dichtmasse 6a befüllt ist. Während des Einbringens der Dichtmasse 6a in die Dichtmittelaufnahme 5 kann die in der Dichtmittelaufnahme 5 vorhandene Luft durch einen Spalt zwischen dem Gehäuse 14 und dem Verschlusselement 4b und durch den zweiten Kanal 28 entweichen.

Während des Einbringens der Dichtmasse 6a in die Dichtmittelaufnahme 5 kann beispielsweise der zweite Kanal 28, in den von außen keine Dichtmasse 6a eingebracht wird, auf das Austreten von Dichtmasse 6a überwacht werden. Dies kann als Kriterium zum Beenden des Befüllvorgangs detektiert werden. Alternativ kann das einzubringende Volumen beziehungsweise die einzubringende Masse der Dichtmasse 6a überwacht werden, wobei das einzubringende Volumen beziehungsweise die einzubringenden Masse dem Volumen der Dichtmittelaufnahme 5 zuzüglich des Volumens der Kanäle 27,28 entspricht. Alternativ kann der Einbringdruck der Dichtmasse 6a überwacht werden und ein sprunghafter Anstieg des Einbringdrucks als Kriterium für den Abbruch des Einfüllvorgangs genutzt werden. Dieses Verfahren ist besonders für Ausführungsformen geeignet, die nur einen oder mehrere erste Kanäle 27 (Einfüllkanäle) aber keine zweiten Kanäle 28 (Austrittskanäle) aufweisen.

Figur 2b zeigt eine erfindungsgemäße Stelleinheit 2 nach der Beendigung des Befüllvorgangs. Die gesamte Dichtmittelaufnahme 5, der erste und der zweite Kanal 27,28 sind vollständig mit der Dichtmasse 6a befüllt.
Nach dem Befüllen der Dichtmittelaufnahme 5 mit der Dichtmasse 6a schließt sich ein weiterer Verfahrenschritt an, in der die Dichtmasse 6a ausgehärtet wird. Dies kann beispielsweise durch einen Tempervorgang, UV-Bestrahlung, Sauerstoffabschirmung, Sauerstoff- oder Wasserzufuhr erreicht werden. Alternativ kann auch vorgesehen sein eine Zwei-Komponenten Dichtmasse 6a zu verwenden, die bei Vermischung selbstständig ausgehärtet.

Die Dichtmasse 6a kann beispielsweise aus der Gruppe der Silikone, der Polyurethane, der Polysulfide, der MS-Polymere oder der Kautschuke ausgewählt sein. In einer vorteilhaften Weiterbildung weist die Dichtmasse 6a eine hohe magnetische Leitfähigkeit / Magnetisierbarkeit auf. Dies kann dadurch erreicht werden dass in die Dichtmasse 6a ein magnetisch leitfähiger Füllstoff, beispielsweise Partikel, eingemischt sind. Derartige Füllstoffe können beispielsweise aus Metall, Ferriten, Legierungen auf Basis von Eisen, Nickel, Silizium und Kobalt und/ oder alle für Magnetteile verwendbaren Stähle mit einer ausreichend hohen Permeabilität bestehen. Der Füllstoff kann beispielsweise in kristalliner, amorpher oder nanokristalliner Form Verwendung finden. Dabei weist der magnetisch leitfähige Füllstoff eine magnetische Suzeptibilität größer Null, vorzugsweise größer 1, besonders bevorzugt größer 100 auf. In diesem Fall kann das Dichtelement 6 auf Höhe des Kragens 11a des ersten Magnetjochs 11 angeordnet werden, wodurch der axiale Bauraumbedarf der Stelleinheit 2 sinkt. Durch die Verwendung eines Dichtelements 6 mit einer hohen magnetischen Leitfähigkeit / Magnetisierbarkeit in dem Flusspfad der Magnetfeldlinien wird den magnetischen Feldlinien beim Übergang vom Kragen 11a zu dem Gehäuse 14 ein Flusspfad zur Verfügung gestellt. Dadurch wird das Streufeld an dieser Stelle im Vergleich zu herkömmlichen (diamagnetischen) Dichtelementen minimiert und somit eine hohe Umsetzung des durch den Spulenstrom erzeugten Magnetfeldes in eine Axialverschiebung des Steuerkolbens 26 erreicht.

In Figur 3 ist eine zweite Ausführungsform einer erfindungsgemäßen Stelleinheit 2 dargestellt. Im Unterschied zur ersten Ausführungsform, die in den Figuren 1a bis 2b dargestellt ist, sind die Kanäle 27,28 als Aussparungen in dem Verschlusselement 4b ausgebildet. Diese bestehen jeweils aus einer Längsnut, die sich ausgehend von der als Ringnut ausgebildeten Dichtmittelaufnahme 5 in axialer Richtung entlang einer Innenmantelfläche des Gehäuses 14 erstrecken. Oberhalb dieser Wandung erstreckt sich die Aussparung in radialer Richtung nach außen. Alternativ kann die Längsnut auch in dem Gehäuse 14 ausgebildet sein. Abgesehen von der Ausbildung der Kanäle 27,28 sind die Stelleinheiten 2 der ersten und zweiten Ausführungsform und deren Herstellverfahren identisch.

Die Anwendung des erfindungsgemäßen Verfahrens ist nicht auf die in den Ausführungsbeispielen gezeigte Position der Dichtmittelaufnahme 5 bzw. des Dichtmittels 6 beschränkt. Vielmehr kann das Verfahren zur Abdichtung einer beliebigen Stelle der Stelleinheit 2 angewendet werden. Denkbar wäre beispielsweise den Dichtring 24 durch eine eingespritzte Dichtung (analog Dichtelement6) zu ersetzten. Zu diesem Zweck könnten Kanäle 27, 28 in der Mantelfläche des rohrförmigen Abschnitts 18 des zweiten Magnetjochs 17 auf der Höhe der abzudichtenden Stelle ausgebildet werden.

### Bezugszeichen

| | |
|---|---|
| 1 | Hydraulikventil |
| 2 | Stelleinheit |
| 3 | Ventilabschnitt |
| 4 | Spulenkörper |
| 4a | Spulenträger |
| 4b | Verschlusselement |
| 4c | Anschlusselement |
| 5 | Dichtmittelaufnahme |
| 6 | Dichtelement |
| 6a | Dichtmasse |
| 7 | Spule |
| 8 | Materialschicht |
| 9 | Steckverbindung |
| 10 | Ausnehmung |
| 11 | erstes Magnetjoch |
| 11a | Kragen |
| 12 | Ankerführungshülse |
| 13 | Anschlag |
| 14 | Gehäuse |
| 14a | Einführöffnung |
| 15 | Lasche |
| 16 | Anker |
| 17 | zweites Magnetjoch |
| 18 | rohrförmiger Abschnitt |
| 19 | ringförmiger Abschnitt |
| 20 | Boden |
| 21 | Öffnung |
| 22 | Montageflansch |
| 23 | Verstemmung |
| 24 | Dichtring |
| 25 | Ventilgehäuse |
| 25a,b | Ventilsitz |
| 26 | Steuerkolben |
| 26a,b | Schließkörper |
| 27 | erster Kanal |
| 28 | zweiter Kanal |
| 29 | Stößelstange |
| | |
| P | Zulaufanschluss |
| T | Tankanschluss |
| A | erster Arbeitsanschluss |

## Patentansprüche

1. Verfahren zur Herstellung einer elektromagnetischen Stelleinheit (2) für ein Hydraulikventil (1), wobei die elektromagnetische Stelleinheit (2) aufweist:
- ein Gehäuse (14) und ein Verschlusselement (4b),
- wobei das Gehäuses (14) die elektromagnetische Stelleinheit (2) zumindest teilweise gegenüber der Umgebung begrenzt,
- wobei das Verschlusselement (4b) innerhalb einer Einführöffnung (14a) des Gehäuses (14) angeordnet ist und
- wobei an einer Grenzfläche zwischen dem Gehäuse (14) und dem Verschlusselement (4b) eine Dichtmittelaufnahme (5) ausgebildet ist,
- **dadurch gekennzeichnet, dass** zumindest ein erster Kanal (27) vorgesehen ist, der sowohl in die Dichtmittelaufnahme (5) mündet als auch zur Umgebung der Stelleinheit (2) offen ausgeführt ist und nach der Montage des Verschlusselements (4b) in der Einführöffnung (14a) des Gehäuses (14) eine Dichtmasse (6a) über den ersten Kanal (27) in die Dichtmittelaufnahme (5) eingebracht wird.

2. Verfahren nach Anspruch 1, **dadurch gekennzeichnet, dass** nach dem Einbringen der Dichtmasse (6a) diese ausgehärtet wird.

3. Verfahren nach Anspruch 1, **dadurch gekennzeichnet, dass** während des Einbringens der Dichtmasse (6a) der Einbringdruck überwacht wird und bei einem sprunghaften Anstieg des Einbringdrucks der Einbringvorgang beendet wird.

4. Verfahren nach Anspruch 1, **dadurch gekennzeichnet, dass** das einzubringende Volumen der Dichtmasse (6a) überwacht wird, wobei das einzubringende Volumen dem Volumen der Dichtmittelaufnahme (5) zuzüglich des Volumens der Kanäle (27,28) entspricht.

5. Verfahren nach Anspruch 1, **dadurch gekennzeichnet, dass** zumindest ein zweiter Kanal (28), in den von außerhalb der Stelleinheit (2) keine Dichtmasse (6a) eingebracht wird, auf das Austreten von Dichtmasse (6a) überwacht wird, wodurch das Ende des Befüllvorgangs detektiert wird.

## Claims

1. Method for producing an electromagnetic actuating unit (2) for a hydraulic valve (1), the electromagnetic actuating unit (2) having:
- a housing (14) and a closing element (4b),
- the housing (14) at least partially delimiting the electromagnetic actuating unit (2) with respect to the surroundings,
- the closing element (4b) being arranged inside an introduction orifice (14a) of the housing (14), and
- a sealing-means receptacle (5) being formed at an interface between the housing (14) and the closing element (4b),
- **characterized in that** at least one first duct (27) is provided, which both issues into the sealing-means receptacle (5) and is designed to be open to the surroundings of the actuating unit (2) and, after the closing element (4b) has been mounted in the introduction orifice (14a) of the housing (14), a sealing compound (6a) is introduced into the sealing-means receptacle (5) via the first duct (27).

2. Method according to Claim 1, **characterized in that** the sealing compound (6a) is cured after it has been introduced.

3. Method according to Claim 1, **characterized in that**, while the sealing compound (6a) is being introduced, the introduction pressure is monitored, and the introduction operation is terminated in the event of an abrupt rise in the introduction pressure.

4. Method according to Claim 1, **characterized in that** the volume of sealing compound (6a) to be introduced is monitored, the volume to be introduced corresponding to the volume of the sealing-means receptacle (5) plus the volume of the ducts (27, 28).

5. Method according to Claim 1, **characterized in that** at least one second duct (28), into which no sealing compound (6a) is introduced from outside the actuating unit (2), is monitored for the emergence of sealing compound (6a), as a result of which the end of the filling operation is detected.

## Revendications

1. Procédé de fabrication d'une unité de réglage électromagnétique (2) pour une soupape hydraulique (1), l'unité de réglage électromagnétique (2) comportant :
- un carter (14) et un élément de fermeture (4b) ;
- le carter (14) délimitant l'unité de réglage électromagnétique (2) au moins en partie par rapport à l'environnement ;
- l'élément de fermeture (4b) étant disposé à l'intérieur d'une ouverture d'introduction (14a) du carter (14) ; et
- un logement de moyen d'étanchéification (5) étant réalisé au niveau d'une surface limite prévue entre le carter (14) et l'élément de fermeture (4b) ;
- **caractérisé en ce qu'**au moins un premier canal (27) est prévu, celui-ci débouchant d'une part dans le logement de moyen d'étanchéification (5) et étant réalisé d'autre part de façon ouverte par rapport à l'environnement de l'unité de réglage (2) et une masse d'étanchéité (6a) étant amenée dans le logement de moyen d'étanchéification (5) par le biais du premier canal (27), après le montage de l'élément de fermeture (4b) dans l'ouverture d'introduction (14a) du carter (14).

2. Procédé selon la revendication 1, **caractérisé en ce que** la masse d'étanchéité (6a) est durcie après application.

3. Procédé selon la revendication 1, **caractérisé en ce que** la pression d'application est surveillée pendant l'application de la masse d'étanchéité (6a) et que le processus d'application est achevé en cas de montée brusque de la pression d'application.

4. Procédé selon la revendication 1, **caractérisé en ce que** le volume à appliquer de masse d'étanchéité (6a) est surveillé, le volume à appliquer correspondant au volume du logement de moyen d'étanchéification (5) associé au volume des canaux (27, 28).

5. Procédé selon la revendication 1, **caractérisé en ce qu'**au moins un deuxième canal (28) est prévu dans lequel aucune masse d'étanchéité (6a) n'est amenée depuis l'extérieur de l'unité de réglage (2), l'apparition de masse d'étanchéité (6a) dans ledit canal étant surveillée afin de détecter la fin du processus de remplissage.
